# EUROPEAN PATENT APPLICATION

(11) **EP 1 741 484 A1**
(43) Date of publication of application: **10.01.2007**
(21) Application number: 06252722.1
(22) Date of filing: 25.05.2006
(51) Int. Cl.: B01F 17/00

(54) **Nanoparticle thin film, method for dispersing nanoparticles and method for producing nanoparticle thin film using the same**

(30) Priority: 05.07.2005 KR 20050060215; 26.10.2005 KR 20050101361; 12.01.2006 KR 20060003661
(71) Applicant: Samsung Electronics Co., Ltd., Suwon-si 442-742 Gyeonggi-Do (KR)
(72) Inventor: Choi, Jae Young 155-802 Hwanggolmaeul Jugong, Suwon-si, Gyeonggi-do 443-740 (KR); Cho, Kyung Sang, Gwacheon-si, Gyeonggi-do 427-060 (KR); Lee, Eun Sung, Seoul 120-831 (KR); Park, Jong Bong 401-1103, Byeoksan Apt., Gyeonggi-do 447-721 (KR); Yoon, Seon Mi Dormitory of Samsung Adv. Inst. Tech, Yongin-si Gyeonggi-do 449-7287 (KR); Song, Sang Hoon, Hwaseong-si Gyeonggi-do, 445-972 (KR); Hong, Jong Dal 105-203 Daewoo 3-cha Apt., Incheon, 406-130 (KR)
(74) Representative: Kyle, Diana

(57) **Abstract**

A nanoparticle thin film, a method for dispersing nanoparticles and a method for producing nanoparticle thin film using the same. The method for dispersing nanoparticles may include modifying the surface of nanoparticles with a charged material, drying the surface-modified nanoparticles under vacuum and/or dispersing the dried nanoparticles in a solvent. According to the methods provided, the nanoparticle thin film may exhibit more stability, lesser defects and/or lesser aggregation of nanoparticles. In addition, 2-dimensional and/or 3-dimensional nanoparticle thin films may be produced in which nanoparticles may be more uniformly applied over larger areas. The nanoparticle thin films produced by the methods may be more effectively used for a variety of applications (*e*.*g*., flash memory devices, DRAMs, hard disks, luminescent devices, organic light-emitting diodes (OLEDs) or the like).

## Description

The present invention relates to a nanoparticle thin film, a method for dispersing nanoparticles and a method for producing a nanoparticle thin film using the same. According to particular embodiments, the present invention further relates to a method for dispersing nanoparticles by modifying the surface of nanoparticles with a charged material, drying the surface-modified nanoparticles under vacuum, dispersing the dried nanoparticles in a solvent and/or centrifuging to prepare a dispersion of the nanoparticles. Further embodiments of the present invention include a method for producing a 2-dimensional or 3-dimensional nanoparticle thin film in which nanoparticles are more uniformly applied over a larger area using the nanoparticle dispersion prepared by the dispersion method.

Quantum dots are nanometer-sized semiconductor materials which exhibit quantum confinement effects. Quantum dots may be used in various electrical and optical devices due to their physical, chemical and/or electrical properties. Dispersions of quantum dots in solvents may be used in the fabrication of a variety of electrical and optical devices.

Quantum dots may have a tendency toward aggregation between the particles due to the characteristics of nanoparticles. Aggregations may not sufficiently exhibit their inherent advantages. Thus, various methods have been proposed to improve the dispersibility of nanoparticles by retarding the aggregation of the nanoparticles in media.

For example, nanoparticles dispersible in aqueous solutions may be prepared by capping the surface of the nanoparticles with a dispersant and displacing the surface with a charged material. The development of techniques associated with the displacement of materials coordinated to the surface of nanoparticles may be useful in terms of compatibility with electronic circuits, polymeric materials, biomolecules and the like. The applicability of quantum dots may be extended to a variety of fields. When modifying the surface of nanoparticles by sonication, instability problems (*e.g.*., destruction of the nanoparticles) may occur.

Some techniques to improve the dispersibility of nanoparticles by displacing materials coordinated to the surface of the nanoparticles are known in the art. For example, sonication, washing and/or filtrating using a column or a filter have been employed to separate nanoparticle aggregates. Over longer periods of time, higher ultrasonic energy used during sonication may result in increased destruction and defects of the nanoparticles. If the reaction time is shortened in order to reduce the defects, the reaction may not proceed sufficiently and the yield may be lower. According to a conventional separation process wherein aggregated particles may be removed from sonicated nanoparticles using a column or a filter, because nanoparticles may be passed through a filter having smaller pores, a higher water pressure may be applied to the filter for a longer time and the nanoparticles may adsorb onto the filter, leading to a loss of the nanoparticles. Accordingly, these separation processes may be unsuitable for the production of nanoparticles, especially for larger production.

When applying a dispersion of quantum dots in a dispersant during the fabrication of most devices, it may be desirous to more uniformly arrange the quantum dots over larger areas to form nanoparticle thin films. However, few techniques are know which allow materials having a size on the order of a few nanometers to be arranged on a 2-dimensional or 3-dimensional substrate, having a size on the order of millimeters or more, to produce a more aligned structure. The conventional art acknowledges thin films having an area of a maximum of about 1 µm × 1 µm.

A technique used to form nanoparticle thin films is a Langmuir-Blodgett (LB) process, wherein films may be formed at the interface between an aqueous solution and air. However, this process utilizes weaker Van der Waals interactions between particles or between particles and substrates and transfer ratios of about 1 or less. Transfer values represent the degree of transfer of particles to substrates. The Langmuir-Blodgett process may not be suitable for the production of more uniform monolayers over larger areas.

Another technique is a dipping process wherein a substrate may be repeatedly dipped in an aqueous solution of particles to increase the coverage of the particles adsorbed to the substrate. The coverage may be limited to less than about 70% despite repeatedly dipping.

Another technique is an electrostatic self assembly process wherein particles and a substrate are oppositely charged to form a thin film. This process may cause the formation of nanoparticle aggregates, which may lead to increased defects.

In addition of the aforementioned processes, pyrolysis, laser ablation and chemical vapor deposition (CVD) are known wherein nanoparticles may be directly formed on a substrate through a vapor phase reaction using raw materials supplied in a gaseous state, followed by sequential deposition and growth, to arrange the nanoparticles on the substrate. However, according to these processes, 2-dimensional monolayer films having a density of about 10¹¹ particles/cm² or higher, in which particles may be more uniformly applied over larger areas, may not be produced. Moreover, according to conventional vapor processes, fewer kinds of nanoparticles may be coated on substrates.

The conventional art acknowledges a method for producing a 3-dimensional nanoparticle thin film by forming quantum dots on the bottom of concave portions. According to this method, 3-dimensional nanoparticle thin film may be produced by a vapor process *(*e.g.*,* chemical vapor deposition) using more costly equipment, increasing the manufacturing costs.

Example embodiments of the present invention relate to a method for dispersing nanoparticles and a method for producing a nanoparticle thin film using the same.

In accordance with example embodiments of the present invention, there is provided a method for dispersing nanoparticles, the method including modifying a surface of a plurality of nanoparticles, drying the modified nanoparticles under vacuum, dispersing the dried nanoparticles in a solvent, and/or centrifuging the dispersed solvent to remove residue and impurities.

In accordance with other example embodiments of the present invention, there is provided a method for producing a nanoparticle thin film, the method including pre-treating a substrate, dispersing the plurality of nanoparticles according to the dispersing method described above to produce a nanoparticle dispersion and/or coating the nanoparticle dispersion on the pre-treated substrate.

In accordance with yet other example embodiments of the present invention, there is provided a 2-dimensional or 3-dimensional nanoparticle thin film in which nanoparticles may be more uniformly arranged on a substrate wherein the 2-dimensional nanoparticle thin film may be a monolayer having a defect density of less than about 5% and a packing density of about 10¹¹ particles/cm² or higher over an area of about 1 mm × 1 mm or larger. The 3-dimensional nanoparticle thin film may be a monolayer or multilayer having various sizes and shapes while maintaining similar, or equivalent, physical properties as the 2-dimensional nanoparticle thin film.

Example embodiments of the present invention also relates to a method for producing a 2-dimensional or 3-dimensional nanoparticle thin film in which nanoparticles may be more uniformly applied over a larger area using a nanoparticle dispersion prepared by the dispersing method described above.
Example embodiments of the present invention provide a method for dispersing nanoparticles by which defects and/or aggregation of nanoparticles may be reduced; and the dispersion efficiency of the nanoparticles may increase.

Example embodiments of the present invention will be more clearly understood from the following detailed description taken in conjunction with the accompanying drawings. FIGS. 1-10 represent non-limiting embodiments of the present invention as described herein.
Fig. 1 schematically shows nanoparticles and a 2-dimensional surface-modified nanoparticle thin film according to example embodiments of the present invention;
Fig. 2 schematically shows the procedure of a method for producing a 3-dimensional nanoparticle thin film according to example embodiments of the present invention;
Fig. 3 shows atomic force microscopy (AFM) images taken on areas of about 500 nm × 500 nm and about 20 µm × 20 µm for an 2-dimensional nanoparticle thin film produced in Example 2 of the present invention;
Fig. 4 shows atomic force microscopy (AFM) images taken at several points on an area of about 1 inch × 1 inch for a 2-dimensional nanoparticle thin film produced in Example 2 of the present invention;
Fig. 5a is an atomic force microscopy (AFM) image taken on an area of about 1 µm × 1 µm for a 2-dimensional nanoparticle thin film produced in Example 2 of the present invention;
Fig. 5b is a sectional analysis graph of the nanoparticle thin film presented in Fig. 5a;
Fig. 6a is a scanning electron microscopy (SEM) image taken on an area of about 400 nm (diameter) × 400 nm (depth) for a 3-dimensional substrate used in Example 3 of the present invention;
Fig. 6b is a partially enlarged view of Fig. 6a;
Fig. 7a shows scanning electron microscopy (SEM) images taken on an area of about 400 nm (diameter) × 400 nm (depth) for 3-dimensional nanoparticle thin films produced at ambient pressure and under vacuum in Example 3 of the present invention, respectively;
Fig. 7b shows partially enlarged views of Fig. 7a;
Fig. 8a is a scanning electron microscopy (SEM) image taken on an area of about 200 nm (diameter) × 400 nm (depth) for a 3-dimensional substrate used in Example 4 of the present invention;
Fig. 8b is a partially enlarged view of Fig. 8a;
Fig. 9a shows scanning electron microscopy (SEM) images taken on an area of about 200 nm (diameter) × 400 nm (depth) for 3-dimensional nanoparticle thin films produced at ambient pressure and under vacuum in Example 4 of the present invention;
Fig. 9b shows partially enlarged views of Fig. 9a; and
Fig. 10 shows transmission electron microscopy (TEM) images taken at several points on an area of about 400 nm (diameter) × 400 nm (depth) for a 3-dimensional nanoparticle thin film produced in Example 3 of the present invention.

Various example embodiments of the present invention will now be described more fully with reference to the accompanying drawings in which some example embodiments of the invention are shown. In the drawings, the thicknesses of layers and regions may be exaggerated for clarity.

Detailed illustrative embodiments of the present invention are disclosed herein. However, specific structural and functional details disclosed herein are merely representative for purposes of describing example embodiments of the present invention. This invention may, however, may be embodied in many alternate forms and should not be construed as limited to only the embodiments set forth herein.

Accordingly, while example embodiments of the invention are capable of various modifications and alternative forms, embodiments thereof are shown by way of example in the drawings and will herein be described in detail. It should be understood, however, that there is no intent to limit example embodiments of the invention to the particular forms disclosed, but on the contrary, example embodiments of the invention are to cover all modifications, equivalents, and alternatives falling within the scope of the invention. Like numbers refer to like elements throughout the

### description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments of the present invention. As used herein, the term "and/or" includes any and all combinations of one or more of the associated listed items.

The terminology used herein is for the purpose of describing particular embodiments only and is not intended to be limiting of example embodiments of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the scope of example embodiments of the present invention.
Also, the use of the words "compound," "compounds," or "compound(s)," refer to either a single compound or to a plurality of compounds. These words are used to denote one or more compounds but may also just indicate a single compound.

Example embodiments of the present invention are described herein with reference to cross-sectional illustrations that are schematic illustrations of idealized embodiments (and intermediate structures). As such, variations from the shapes of the illustrations as a result, for example, of manufacturing techniques and/or tolerances, may be expected. Thus, example embodiments of the invention should not be construed as limited to the particular shapes of regions illustrated herein but may include deviations in shapes that result, for example, from manufacturing. For example, an implanted region illustrated as a rectangle may have rounded or curved features and/or a gradient (e.g., of implant concentration) at its edges rather than an abrupt change from an implanted region to a non-implanted region. Likewise, a buried region formed by implantation may result in some implantation in the region between the buried region and the surface through which the implantation may take place. Thus, the regions illustrated in the figures are schematic in nature and their shapes do not necessarily illustrate the actual shape of a region of a device and do not limit the scope of the present invention.

It should also be noted that in some alternative implementations, the functions/acts noted may occur out of the order noted in the FIGS. For example, two FIGS. shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments of the present invention belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In order to more specifically describe example embodiments of the present invention, various aspects of the present invention will be described in detail with reference to the attached drawings. However, the present invention is not limited to the example embodiments described.

Hereinafter, example embodiments of the present invention will now be explained in more detail with reference to the accompanying drawings.

Example embodiments of the present invention relate to a nanoparticle thin film, a method for dispersing nanoparticles and a method for producing a nanoparticle thin film using the same.

Other example embodiments of the present invention provide a method for dispersing nanoparticles by modifying the surface of nanoparticles under milder reaction conditions so that the nanoparticle surface may be charged, drying the surface-modified nanoparticles under vacuum to partially, or completely, remove the remaining solvent and/or dispersing the dried nanoparticles in an solution (*e.g.*, an aqueous solution). The residues and/or impurities may be removed by centrifuging. Hereinafter, a dispersion method according to example embodiments of the present invention will be explained in detail.

### Modification of Nanoparticle Surface

A solution of a charged material, (*e.g.*, mercaptoacetic acid (MAA) in a suitable solvent such as chloroform) may be heated. The nanoparticles may be added to the solution to prepare a mixed solution.
The mixed solution may be allowed to react by stirring under mild reaction conditions, *e.g.*, reflux conditions. According to the dispersion method provided wherein the mixed solution may be stirred under reflux conditions, the stability and/or the yield of the modified particles may be improved without sonication.

The nanoparticles may include, any commercially available products and any nanoparticles prepared by synthesis techniques known in the art, including, organometallic chemical vapor deposition, molecular beam epitaxy and/or wet chemistry synthesis.

Non-limiting examples of the nanoparticles may include Group II-IV compound semiconductor particles, Group III-V compound semiconductor particles, Group IV-VI compound semiconductor particles, Group IV compound semiconductor particles, metal particles, and/or magnetic particles. The nanoparticles may also include CdS, CdSe, CdTe, ZnS, ZnSe, ZnTe, GaN, GaP, GaAs, GaSb, AlN, AlP, AlAs, AlSb, InP, InAs, InSb, SiC, Fe, Pt, Ni, Co, Al, Ag, Au, Cu, FePt, Fe₂O₃, Fe₃O₄, Si, and/or Ge, but are not limited thereto. Core-shell structured alloy nanoparticles may be used. The size of nanoparticles may be in the range of about 2 nm to 30 nm.

Non-limiting examples of the charged material used to modify the surface of the nanoparticles may include mercaptoacetic acid (MAA), 3-mercaptopropionic acid, cysteamine, aminoethanethiol, N,N-dimethyl-2-mercaptoethyl ammonium, tetramethylammonium hydroxide (TMAH), glutamic acid, glutaric acid, glutamine, L-lysine monohydrochloride and/or lysine.

Stirring may be performed at about 50-150°C for approximately 0.5-10 hours (*e.g.,* approximately 1-10 hours) to make the mixed solution more uniform.

### Drying Surface-Modified Nanoparticles Under Vacuum

Precipitation and centrifugation may be performed, and alternately repeated, to wash the nanoparticle solution. This repetitive procedure may substantially remove remaining residues and/or impurities from the nanoparticle solution. The washing may be carried out by repeating the dispersion and/or precipitation of the nanoparticle solution in an organic solvent. The washing procedure may be performed about three to ten times to achieve a more thorough wash.

The washed nanoparticles may be dried under vacuum to substantially remove the remaining solvent. In an example embodiment, when air drying the washed nanoparticles, the solvent may be insufficiently removed and/or oxidation of the nanoparticles may occur. The remaining solvent may be removed by drying the washed nanoparticles under vacuum. Aggregation of the nanoparticles may be more effectively retarded. For more thorough removal of the remaining solvent, the drying may be carried out under vacuum for approximately 1-12 hours.

### Centrifugation of Solution of Modified Nanoparticles

The dried nanoparticles may be dispersed in a solvent, (*e.g.,* water or a Tris buffer). The nanoparticle dispersion obtained may contain nanoparticle aggregates and/or impurities in addition to the surface-modified nanoparticles. Centrifugation may be conducted to separate the surface-modified nanoparticles from the nanoparticle dispersion. The centrifugation may be carried out at about 4,000-50,000g for approximately 1 minute to 3 hours (*e.g.*, about 4,000-30,000g for approximately 1 minute to 1 hour) to separate and/or precipitate the nanoparticle aggregates from the nanoparticle dispersion. Centrifugation may result in shorter separation times and/or smaller quantities of the nanoparticles may absorb onto the column or filter, increasing the yield. Centrifugation may be more suitable for larger productions of the surface-modified nanoparticles.

Example embodiments of the present invention may also provide a method for producing a nanoparticle thin film by coating the nanoparticle dispersion on a 2-dimensional or 3-dimensional substrate. The nanoparticle dispersion may have increased dispersibility. Using the nanoparticle dispersion provided may reduce the amounts of aggregates formed and/or impurities adsorbed on the column or filter during the manufacture of a nanoparticle thin film. According to example embodiments of the present invention, a 2-dimensional monolayer nanoparticle thin film, in which the nanoparticles may be more uniformly arranged over an area of approximately 1 mm × 1 mm or larger, may be formed. A monolayer or multilayer nanoparticle thin film may also be formed on the surface of a 3-dimensional structure having various sizes and shapes.

The nanoparticle dispersion prepared according to example embodiments of the present invention may be used for the production of the nanoparticle thin films, alternatively various nanoparticle dispersions prepared by other methods known in the art for the production of nanoparticle thin films may also be used.

Methods for producing a nanoparticle thin film according to example embodiments of the present invention may include pre-treating a 2-dimensional or 3-dimensional substrate, dispersing the plurality of nanoparticles according to the dispersing method described above and/or coating the nanoparticle dispersion on the pretreated 2-dimensional or 3-dimensional substrate.

Hereinafter, the method according to example embodiments of the present invention will be explained in detail based on the respective steps.

### Pre-treating 2-dimensional or 3-dimensional substrate to Charge the Substrate Oppositely to the Surface of the Nanoparticles

A substrate may be pre-treated. The pretreatment may serve to modify the surface of the substrate such that the substrate may be charged oppositely to the surface of the nanoparticles. The pretreatment may be performed by washing the substrate. The washed substrate may be reacted with an aminosilane or carboxysilane to form an amino group or carboxyl group on the substrate surface.

The pretreatment may be performed by washing the substrate with a pirana solution followed by an RCA solution (*e.g.,* NH₄OH/H₂O₂/H₂O = 1/1/5). A reaction solution, containing a compound with a functional group, to be adsorbed by the substrate (*e.g.,* an aminosilane/toluene solution), may be reacted with the washed substrate.

The functional group to be adsorbed may include any functional group that allows the substrate surface to have a charge opposite to that of the nanoparticle surface. Non-limiting examples of such compounds may include 3-aminopropylmethyldiethoxysilane (APS), mercaptoacetic acid (MAA), 3-mercaptopropionic acid, cysteamine, aminoethanethiol, N,N-dimethyl-2-mercaptoethyl ammonium, tetramethylammonium hydroxide (TMAH), glutamic acid, glutaric acid, glutamine, L-lysine monohydrochloride and lysine.

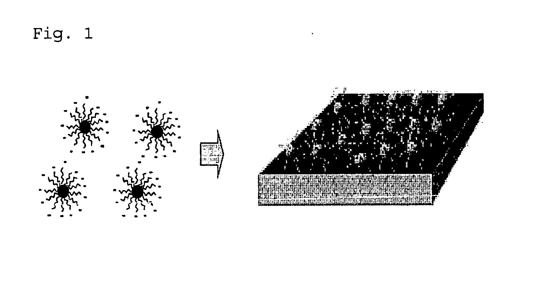

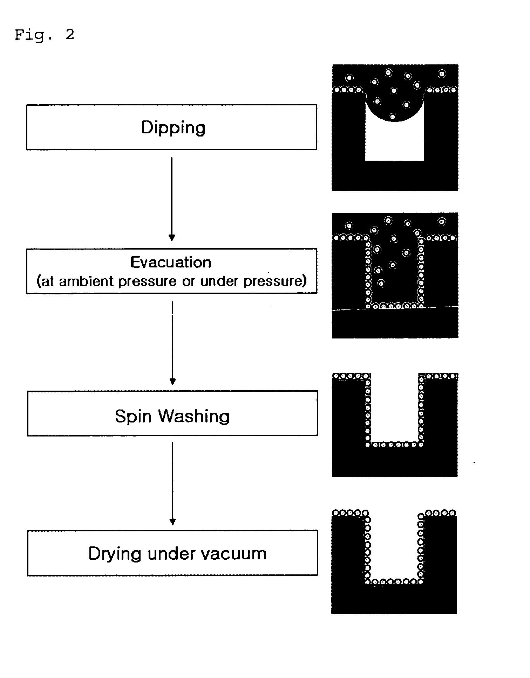

The term "2-dimensional substrate" means a substrate having a substantially flat surface (*e.g.*, the substrate shown in Fig. 1), and the term "3-dimensional substrate" means a substrate having a three-dimensional irregular structure (*e.g.,* the substrate shown in Fig. 2). However, any type of substrate may be used according to example embodiments of the present invention.

The reaction solution may be more sufficiently applied to the 2-dimensional substrate by dipping without particular conditions. The reaction solution may be applied to the 3-dimensional substrate by dipping at ambient pressure, under vacuum or under an applied pressure.

According to example embodiments of the present invention, due to good wettability when the contact angle between the reaction solution and the substrate is less than or equal to 90°, the reaction solution may be applied over the 3-dimensional substrate, decreasing the need for vacuumization and/or pressurization. However, due to poor wettability when the contact angle between the reaction solution and the substrate is greater than 90°, the reaction solution may not be readily applied over the 3-dimensional substrate, possibly necessitating the use of vacuumization and pressurization to apply the reaction solution over the 3-dimensional substrate.

The dipping may be carried out under vacuum at about 760 torr or lower, or at a pressure of about 760 torr or higher, to more sufficiently apply the reaction solution over the substrate. The dipping may be carried out for approximately 0.5-12 hours, (*e.g.,* 5 hours).

When the reaction solution is applied to the substrate, the functional group may be adsorbed on the substrate surface. This adsorption may occur due to the physical adsorption and/or chemical reactions between the functional group of the compound dissolved in the reaction solution and/or the substrate.

After modification of the substrate, the remaining solvent may be removed. The pre-treatment of the 2-dimensional substrate may be completed by washing the substrate without evacuation. Meanwhile, the 3-dimensional substrate may be subjected to evacuation under vacuum, pressure or centrifugal conditions.

The evacuation may be carried out under vacuum at about 760 torr or lower, at a pressure of about 760 torr or higher, or under centrifugal condition less than about 1 g. The evacuation may be performed for approximately 1-3,600 seconds (*e.g.,* about 20 seconds). Thereafter, the substrate may be washed and dried.

Although the pre-treatment of the substrate surface by a wet process, *(e.g.,* dipping) has been described, a charge may be created on the substrate surface using an E-beam, ion beam and/or atomic force microscopy.

### Coating Nanoparticle Dispersion on a Pretreated 2-dimensional or 3-dimensional Substrate

The nanoparticles may be coated on the pre-treated substrate using the nanoparticle dispersion prepared by the dispersion method described above.

The nanoparticles may be coated on the 2-dimensional substrate by wet processes, including drop casting, spin coating, dip coating, spray coating, flow coating, screen printing, inkjet printing and the like.

As shown in Fig. 2, the 3-dimensional substrate may be coated with the nanoparticle dispersion by a wet process at ambient pressure, under vacuum or under applied pressure in order to more sufficiently apply the dispersion over the substrate.

Due to good wettability when the contact angle between the nanoparticle dispersion and the substrate is less than or equal to 90°, the nanoparticle dispersion may be applied over the 3-dimensional substrate, reducing the need for vacuumization and/or pressurization. However, due to poor wettability when the contact angle between the nanoparticle dispersion and the substrate is greater than 90° less, the nanoparticle dispersion may not be sufficiently applied over the 3-dimensional substrate, possibly necessitating the use of vacuumization and pressurization to apply the nanoparticle dispersion over the 3-dimensional substrate.

The coating may be carried out under vacuum at about 760 torr or lower, or at a pressure of about 760 torr or higher, to sufficiently apply the nanoparticle dispersion over the substrate. In addition, the coating of the nanoparticle dispersion may be carried out for approximately 0.1-12 hours (*e.g.*, one hour).
When applying the nanoparticle dispersion to the substrate, the nanoparticle surface may be charged oppositely to the substrate surface, which may lead to increased adsorption of the nanoparticles on the substrate surface by electrostatic attraction.

The remaining solvent containing impurities may be removed. The substrate may be washed and dried without any particular need for evacuation. The 3-dimensional substrate may be subjected to evacuation under vacuum, pressure and/or centrifugal conditions in order to more sufficient remove any remaining solvent.

The evacuation may be carried out under vacuum of about 760 torr or lower, at a pressure of about 760 torr or higher, or under centrifugal condition as high as 1 g. The evacuation may be carried out for approximately 1-3,600 seconds (*e.g.*, 20 seconds).

The substrate may be washed (*e.g.,* spin washing) and dried under vacuum, completing the coating of the nanoparticles.

The substrate, on which the nanoparticle thin film may be formed, may be formed of any material known in the art. For example, glass, ITO glass, quartz, a silicon (Si) wafer, a silica-coated substrate, an alumina-coated substrate, polymeric substrate or the like may be used.

Example embodiments of the present invention also provide a nanoparticle thin film in which nanoparticles may be more uniformly arranged on a substrate. According to example embodiments of the present invention, there may be a 2-dimensional monolayer thin film, a 3-dimensional monolayer or a 3-dimensional multilayer thin film having various sizes and shapes.

Fig. 1 schematically shows a 2-dimensional nanoparticle thin film according to an example embodiment of the present invention. Referring to Fig. 1, nanoparticles whose surface may be displaced with a negatively charged material may be more uniformly arranged on a substrate to form a monolayer.

The nanoparticles may exhibit increased stability and fewer nanoparticle aggregates may be present within the 2-dimensional nanoparticle thin film. The 2-dimensional nanoparticle thin film may be more uniformly formed as a monolayer with an area of about 1 mm × 1 mm or larger. The 2-dimensional nanoparticle thin film may be applied to the fabrication of wafers having a size of about 300 mm or larger, which may be used in semiconductor manufacturing processes. The 2-dimensional nanoparticle thin film may have a coverage of about 95% or higher (*e.g.*, a defect density of less than approximately 5%), and a packing density of about 10¹¹ particles/cm² or higher (*e.g.*, 10¹¹-10¹³ parficles/cm²).

The 3-dimensional nanoparticle thin film may have similar, or equivalent, physical properties as the 2-dimensional nanoparticle thin film.

Various kinds of nanoparticles may be coated to produce the nanoparticle thin film. The nanoparticle thin film provided may be more economical in terms of equipment and manufacture cost.

The 2-dimensional or 3-dimensional nanoparticle thin film according to example embodiments of the present invention may be more effectively applied to a variety of fields, including flash memory devices, DRAMs, hard disks, organic light-emitting devices and/or other devices.
Hereinafter, the present invention will be explained in more detail with reference to the following examples. However, these examples are given for the purpose of illustration and are not to be construed as limiting the scope of the invention.

### Example 1: Dispersion of Nanoparticles

1.8424g of mercaptoacetic acid (MAA) may be dissolved in 8 ml of chloroform and then the solution may be heated to about 70°C. 3 ml of CdSe nanoparticles may be slowly added to the solution at 70°C while rapid stirring. The mixture may be reacted while stirring under reflux conditions at about 70°C for approximately 3 hours. After completion of the reaction, the reaction mixture may be centrifuged at approximately 3,000 rpm to obtain a precipitate. The precipitate may be dispersed in chloroform and centrifuged at about 3,000 rpm for approximately 5 minutes. The dispersion and/or centrifugation may be repeated about seven times. The washed nanoparticles may be dried under vacuum for about 6 hours, and dispersed in a Tris buffer (0.1M, pH = 9). The dispersion may be centrifuged at about 15,000 g for approximately 10 minutes to reduce nanoparticle aggregates.

### Example 2: Production of 2-dimensional Monolayer Nanoparticle Thin Film

A 12-inch silicon wafer substrate may be placed in a pirana solution (H₂SO₄/H₂O₂ = 1/3 (v/v), heated for approximately 15 minutes, and washed with methanol/toluene. The washed substrate may be subjected to sonication in an RCA solution (NH₄OH/H₂O₂/H₂O = 1/1/5) at about 70°C for approximately one hour, followed by sonication in methanol. Subsequently, the sonicated substrate may be dipped in a solution of an aminosilane (5% by volume) in toluene to react for approximately 5 hours to adsorb an amine group to the substrate surface, washed with deionized water, and dried.

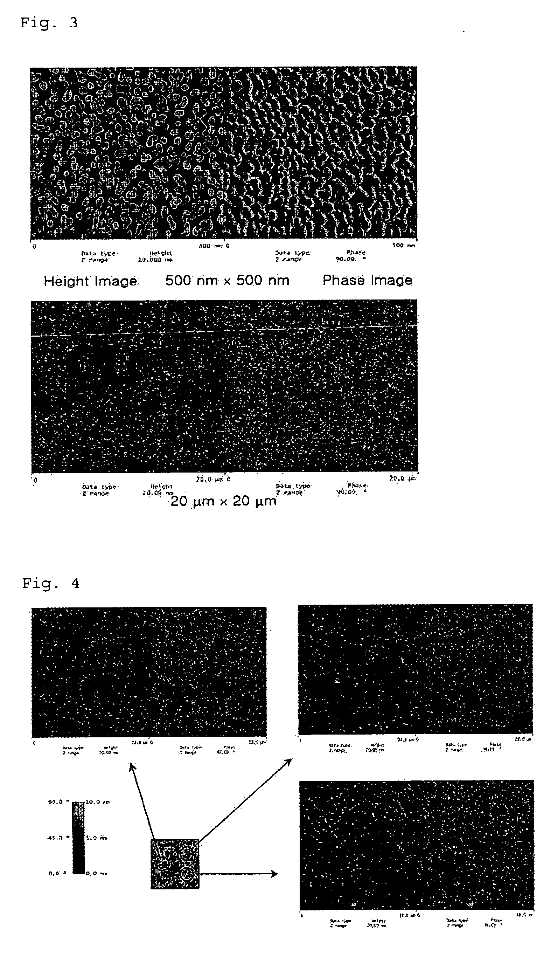

The dried substrate may be dip-coated with the nanoparticle dispersion prepared in Example 1 for approximately one hour, washed, and dried to form a thin film. The atomic force microscopy images of the nanoparticle thin film may be obtained using a nanoscope IV (Digital Instrument). The images may resemble those shown in Figs. 3 to 5.
Fig. 3 shows atomic force microscopy (AFM) images taken on areas of about 500 nm × 500 nm and about 20 µm × 20 µm for the nanoparticle thin film produced according to the method described in Example 3. The images reveal that the nanoparticle thin film has a coverage of about 95% or higher (*e.g.,* a defect density of less than about 5%), and a packing density of about 10¹² particles/cm².

The left images shown in Fig. 3 are height images, and the right images are phase images, indicating that the surface of the substrates may be covered with the nanoparticles.

Fig. 4 shows atomic force microscopy (AFM) images taken at several points having an area of about 1 inch × 1 inch for the nanoparticle thin film produced by the method described in Example 2. The images present thin films having an area of about 1 inch × 1 inch or larger.

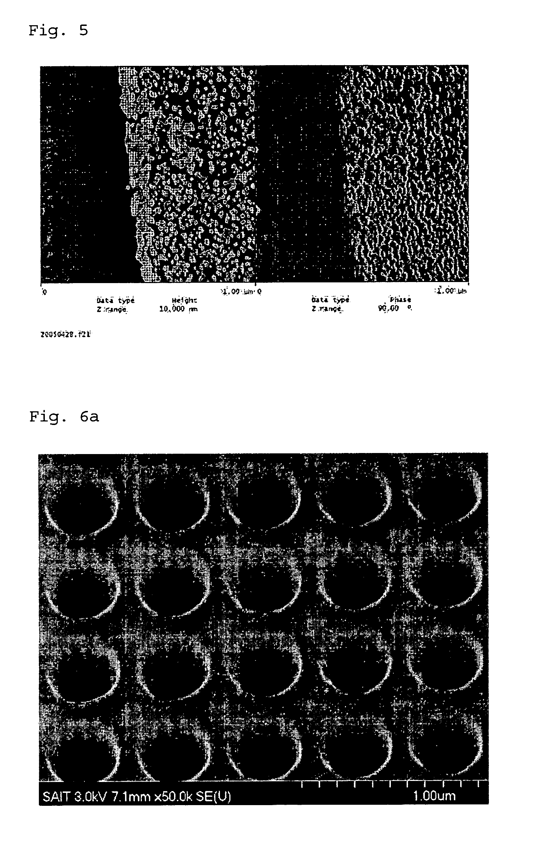

Fig. 5a is an atomic force microscopy (AFM) image taken on an area of about 1 µm × 1 µm for the nanoparticle thin film produced according to the method described in Example 2 of the present invention, and Fig. 5b is sectional analysis graph of the nanoparticle thin film presented in Fig. 5a. As seen from Fig. 5a and 5b, the step height shown in the image demonstrates that the nanoparticle thin film is a monolayer. A portion of the substrate was removed using a laser blade, and then the removed portion was compared with the un-removed portion of the substrate. As a result, the nanoparticles were more uniformly arranged to form a monolayer having a thickness of about 5 nm.

### Example 3: Production of 3-dimensional Monolayer Nanoparticle Thin Film of 400 nm (diameter) × 400 nm (depth)

A 12-inch silicon wafer substrate of about 400 nm (diameter) × 400 nm (depth) may be placed in a pirana solution (H₂SO₄/H₂O₂ = 1/3 (v/v), heated for approximately 15 minutes, and washed with methanol/toluene. The washed substrate may be subjected to sonication in an RCA solution (NH₄OH/H₂O₂/H₂O = 1/1/5) at about 70°C for approximately one hour, followed by sonication in methanol. Subsequently, the sonicated substrate may be dipped in a solution of an aminosilane (5% by volume) in toluene to react for approximately 5 hours to adsorb an amine group to the substrate surface, and spun at about 3,000 rpm for approximately 5 seconds to remove the reaction solution by centrifugal force. The resulting substrate may be dipped in deionized water for 5 seconds and washed by spinning at about 3,000 rpm. The washed substrate may be stored in an aqueous HCl solution (pH =1) before use. Subsequently, each of the substrates may be dip-coated with the nanoparticle dispersion prepared according to the method in Example 1 at ambient pressure and under vacuum chamber (about 2.3 × 10⁻³ torr) for approximately one hour. The resulting substrates may be spun at about 3,000 rpm for approximately 5 seconds to remove the nanoparticle solution. The resulting substrates may be dipped in deionized water for approximately 5 seconds, washed by spinning at about 3,000 rpm, and dried to form thin films.

### Example 4: Production of 3-dimensional Monolayer Nanoparticle Thin Film of 200 nm (diameter) × 400 nm (depth)

3-dimensional monolayer nanoparticle thin films may be produced in the same manner as in Example 3. A 12-inch silicon wafer substrate of about 200 nm (diameter) × 400 nm (depth) may be used.

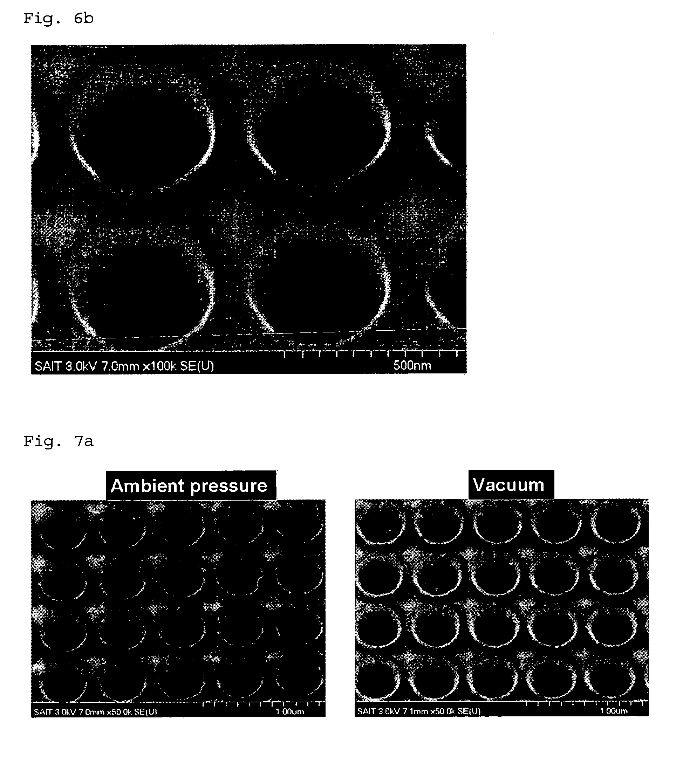

Fig. 6a is a scanning electron microscopy (SEM) image taken on an area of about 400 nm (diameter) × 400 nm (depth) for the 3-dimensional substrate prepared according to the method described in Example 3, and Fig. 6b is a partially enlarged view of Fig. 6a. These images show that cavities of about 400 nm (diameter) × 400 nm (depth) are more regularly arranged.

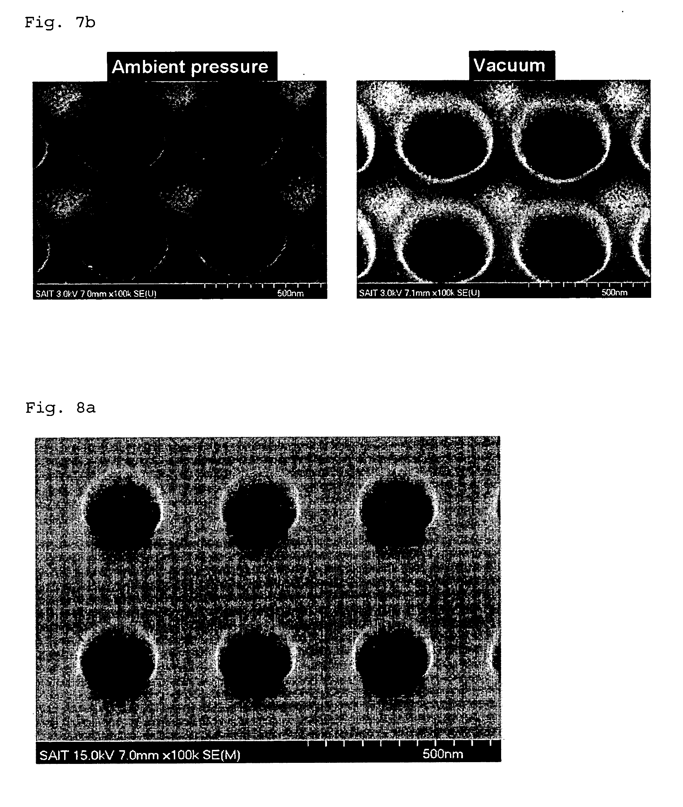

Fig. 7a shows scanning electron microscopy (SEM) images of the nanoparticles adsorbed within cavities of about 400 nm (diameter) × 400 nm (depth) on the 3-dimensional silicon substrates produced according to the method described in Example 3, and Fig. 7b shows partially enlarged views of Fig. 7a. These images show that the nanoparticles are more uniformly adsorbed on the surface of the substrates and the wall and bottom of the cavities. Because the contact angle between the nanoparticle dispersion prepared according to the method described in Example 1 and the 3-dimensional silicon substrates was about 50°, the wettability was good, facilitating the permeation of the nanoparticle dispersion into the cavities of the 3-dimensional substrates.

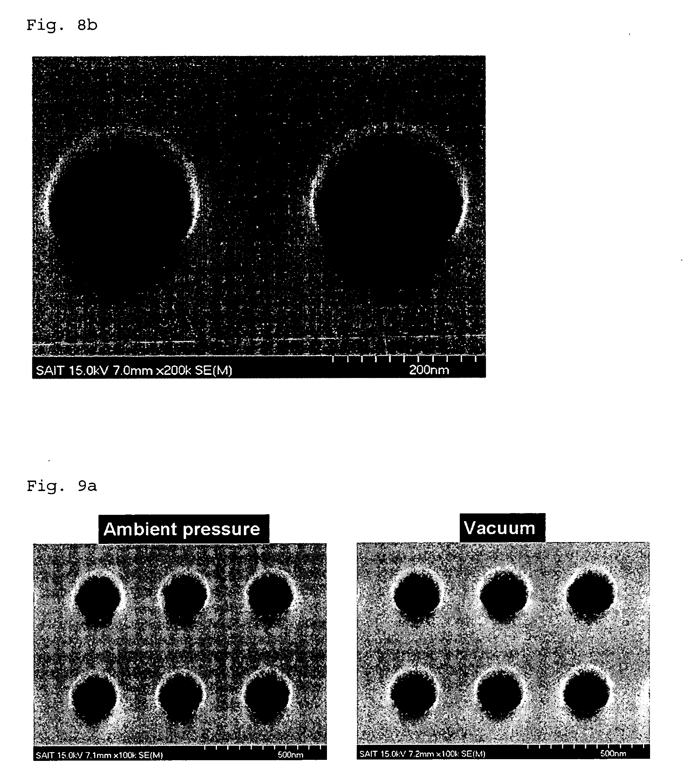

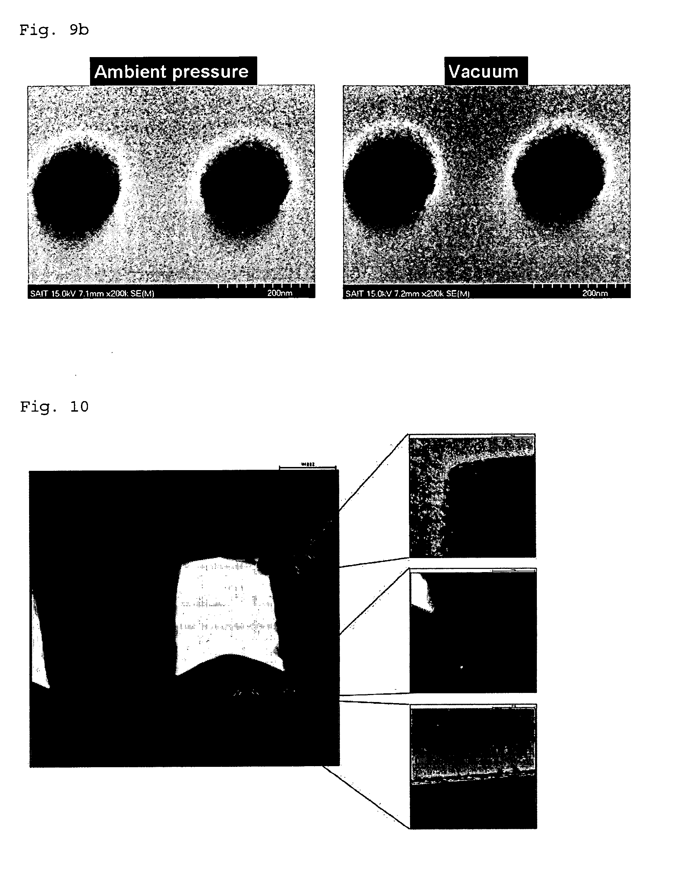

Fig. 8a is a scanning electron microscopy (SEM) image showing the shape of the 3-dimensional silicon substrate used in Example 4, and Fig. 8b is a partially enlarged view of Fig. 8a. These images show that cavities of about 200 nm (diameter) × 400 nm (depth) are more regularly arranged. Fig. 9a shows scanning electron microscopy (SEM) images of the nanoparticles adsorbed within cavities of about 200 nm (diameter) × 400 nm (depth) on the 3-dimensional silicon substrates produced according to the method described in Example 4, and Fig. 9b shows partially enlarged views of Fig. 9a. These images show that the nanoparticles are more uniformly adsorbed on the surface of the substrates and the wall and bottom of the cavities.

Fig. 10 shows transmission electron microscopy (SEM) images taken on areas of about 400 nm (diameter) × 400 nm (depth) for the nanoparticle thin film produced in Example 3. These images show that the nanoparticles are more uniformly adsorbed on the wall and bottom of the cavities to form a monolayer.

According to example embodiments of the present invention, 2-dimensional or 3-dimensional nanoparticle thin films in which nanoparticles are more uniformly applied over larger areas could be produced. Therefore, the nanoparticle thin films may be more effectively applied to the fabrication of flash memory devices, DRAMs, hard disks, luminescent devices and/or organic light-emitting diodes (OLEDs).
According to example embodiments of the present invention, nanoparticles may be surface-modified under milder reaction conditions with higher stability and/or lower defects. In addition, the washed nanoparticles may be dried under vacuum to remove the remaining solvent and decrease the formation of nanoparticle aggregates. Furthermore, because the nanoparticle aggregates may be removed by centrifugation, the dispersion efficiency may be improved and the amounts of the aggregates and impurities to be adsorbed may be reduced during production of a riarioparticle thin film.

Moreover, a nanoparticle dispersion prepared according to example embodiments of the present invention may be coated on a substrate to produce a 2-dimensional monolayer nanoparticle thin film in which nanoparticles are more uniformly applied over an area of about 1 mm × 1 mm or larger, or a monolayer or multilayer thin film on the surface of a 3-dimensional structure having various sizes and shapes. Therefore, the nanoparticle dispersion may be applied to the fabrication of a variety of electrical and optical devices.

## Claims

1. A method for dispersing nanoparticles which comprises:
modifying a surface of a plurality of nanoparticles;
drying the modified nanoparticles under vacuum;
dispersing the dried nanoparticles in a solvent; and
centrifuging the dispersed solvent to remove residue and impurities.

2. The method according to claim 1. wherein said modifying includes changing the surface of the plurality of nanoparticles.

3. The method according to claim 2, wherein said changing includes adding the nanoparticles to a solution having a charged material and stirring the solution under reflux conditions.

4. The method according to any of claims 1 to 3, wherein said modifying is performed at 50-150°C for 1-10 hours.

5. The method according to claim 3 or 4, wherein the charged material is selected from mercaptoacetic acid (MAA), 3-mercaptopropionic acid, cysteamine, aminoethanethiol, N,N-dimethyl-2-mercaptoethyl ammonium, tetramethylammonium hydroxide (TMAH), glutamic acid, glutaric acid, glutamine, L-lysine monohydrochloride and lysine.

6. The method according to any of claims 1 to 5, wherein said drying is performed under vacuum for 1-12 hours.

7. The method according to any of claims 1 to 6, wherein said centrifuging is performed at 4,000-50,000g for 1 minute to 3 hours.

8. The method according to claim 7, wherein said centrifuging is performed at 4,000-30,000g for 1 minute to 1 hour.

9. The method according to any of claims 1 to 8, wherein the plurality of nanoparticles are selected from Group II-IV compound semiconductor particles, Group III-V compound semiconductor particles, Group IV-VI compound semiconductor particles, Group IV compound semiconductor particles, metal particles and magnetic particles.

10. The method according to claim 9, wherein the plurality of nanoparticles are selected from CdS, CdSe, CdTe, ZnS, ZnSe, ZnTe, GaN, GaP, GaAs, GaSb, A1N, A1P, AlAs, AlSb, InP, InAs, InSb, SiC, Fe, Pt, Ni, Co, Al, Ag, Au, Cu, FePt, Fe₂O₃, Fe₃O₄, Si and Ge.

11. The method according to any of claims 1 to 10, wherein the plurality of nanoparticles have a core-shell structure.

12. A method comprising:
pre-treating a 2-dimensional or 3-dimensional substrate;
dispersing the plurality of nanoparticles by the method according to any of claims 1 to 11, to produce a nanoparticle dispersion; and
coating the pre-treated 2-dimensional or 3-dimensional substrate with the nanoparticle dispersion.

13. The method according to claim 12, wherein said pre-treating includes:
washing the 2-dimensional or 3-dimensional substrate; and
treating the washed substrate with a compound having a functional group such that the functional group is adsorbed on the surface of the substrate, the compound being selected from the group consisting of 3-aminopropylmethyldiethoxysilane (APS), mercaptoacetic acid (MAA), 3-mercaptopropionic acid, cysteamine, aminoethanethiol, N,N-dimethyl-2-mercaptoethyl ammonium, tetramethylammonium hydroxide (TMAH), glutamic acid, glutaric acid, glutamine, L-lysine monohydrochloride and lysine.

14. The method according to claim 12, wherein said pre-treating includes:
applying a reaction solution to the substrate at ambient pressure or under vacuum; modifying the substrate surface;
removing the remaining solvent by placing the substrate under vacuum, pressure or centrifugal conditions;
washing the surface-modified substrate; and
drying the washed substrate.

15. The method according to any of claims 12 to 14, wherein said coating includes a process selected from drop casting, spin coating, dip coating, spray coating, flow coating, screen printing and inkjet printing.

16. The method according to any of claims 12 to 15, wherein said coating includes:
applying the dispersion solution prepared by the method according to any of claims 1 to 11 to the substrate at ambient pressure or under vacuum;
coating the nanoparticles on the substrate, removing the remaining solvent by placing the substrate under vacuum, ambient pressure or centrifugal conditions;
washing the coated substrate; and
drying the washed substrate.

17. The method according to any of claims 12 to 16, wherein the substrate is selected from glass, ITO glass, quartz, silicon (Si) wafers, silica-coated substrates, alumina-coated substrates and polymeric substrate.

18. A nanoparticle thin film, comprising nanoparticles uniformly arranged on a substrate wherein the nanoparticle thin film is a layer having a defect density of less than about 5% and a packing density of about 10¹¹ particles/cm² or higher over an area of about 1 mm × 1 mm or larger.

19. The nanoparticle thin film of claim 18, wherein the nanoparticle thin film is a 2-dimensional nanoparticle thin film and the layer is a monolayer.

20. The nanoparticle thin film according to claim 18 or 19, wherein the nanoparticle thin film has a packing density of about 10¹¹-10¹³ particles/cm².

21. The nanoparticle thin film of claim 18 or 20, wherein the nanoparticle thin film is a 3-dimensional nanoparticle thin film and the layer is a monolayer or multilayer.
